Europäisches Patentamt

European Patent Office

Office européen des brevets

(11) Veröffentlichungsnummer: **0 531 772 A2**

# (12) EUROPÄISCHE PATENTANMELDUNG

(21) Anmeldenummer: **92114267.5**

(22) Anmeldetag: **21.08.92**

(51) Int. Cl.5: **H04L 12/56**, H04Q 11/04

(30) Priorität: **12.09.91 DE 4130317**

(43) Veröffentlichungstag der Anmeldung:
**17.03.93 Patentblatt 93/11**

(84) Benannte Vertragsstaaten:
**AT BE CH DE ES FR GB IT LI NL SE**

(71) Anmelder: **Alcatel SEL Aktiengesellschaft**
**Lorenzstrasse 10**
**W-7000 Stuttgart 40(DE)**

(84) **DE**

(71) Anmelder: **ALCATEL N.V.**
**Strawinskylaan 341 (World Trade Center)**
**NL-1077 XX Amsterdam(NL)**

(84) **BE CH ES FR GB IT LI NL SE AT**

(72) Erfinder: **Schrodi, Karl**
**Marderweg 11**
**W-7258 Heimsheim(DE)**
Erfinder: **Cesar, Bozo**
**Strassburger Strasse 19**
**W-7000 Stuttgart 40(DE)**
Erfinder: **Pfeiffer, Bodo**
**Mozartstrasse 14**
**W-7150 Schwieberdingen(DE)**

(74) Vertreter: **Brose, Gerhard et al**
**Alcatel SEL AG Patent- und Lizenzwesen**
**Postfach 30 09 29**
**W-7000 Stuttgart 30 (DE)**

(54) **Verfahren und Vorrichtung zur Umwandlung der Datenstruktur von Nachrichten in einem Paketvermittlungssystem.**

(57) Die Erfindung betrifft ein Verfahren und eine Vorrichtung zur Umwandlung der Datenstruktur von Nachrichten in einem Paketvermittlungssystem, bei dem die Nachrichten sowohl in zellenorientierten Datenstrukturen eingefügt sind als auch in einer rahmenorientierten Datenstruktur auftreten, wobei Zeitschlitze einer in einen Rahmen umgewandelten Zelle jeweils an vorgegebenen Stellen von aufeinanderfolgenden Rahmen angeordnet sind. Um eine günstige Wahrscheinlichkeitsverteilung bezüglich des Auftretens von Verzögerungen bei der Umwandlung von Zellen und Rahmen mit Hilfe einer in einer Umwandlungseinheit angeordneten Speichermatrix (19) zu gewährleisten wird mittels einer Adressierlogik (17) die optimale Position eines aktuell zu speichernden Zeitschlitzes (12) in der Speichermatrix (19) ermittelt und ein entsprechender Speicherzeiger für die Speichersteuerung gesetzt.
Die Erfindung ist vor allem in Paketvermittlungsystemen bei der Datenübertragung anwendbar.

EP 0 531 772 A2

FIG.3

Die Erfindung betrifft ein Verfahren und eine Vorrichtung zur Umwandlung der Datenstruktur von Nachrichten in einem Paketvermittlungssystem bei dem insbesondere eine zellenorientierte Datenstruktur der zu übertragenden Nachrichten in rahmenorientierte Datenstrukturen und umgekehrt konvertiert werden gemäß der Merkmale des Oberbegriffs des Anspruchs 1.

Bei einem bekannten Verfahren dieser Art (DE-OS 37 42 939) werden die zu übertragenden Nachrichten zunächst in Einheiten (Pakete, Zellen) einheitlicher Länge angeordnet, die wiederum zu periodisch wiederkehrenden nächsthöheren Einheiten (Rahmen) zusammengefaßt werden. Bestimmte Nachrichten, beispielsweise Steuerinformationen bei synchronen Verbindungen, werden hierbei in vorgegebenen Positionen innerhalb der Rahmen angeordnet und wie bei der Leitungsvermittlung üblich in synchroner Zeitvielfachtechnik (sychronous transfer mode = STM) vermittelt. Die anderen nicht bevorzugt zu behandelnden Nachrichten werden wie bei der Paketvermittlung üblich, asynchron vermittelt (asynchronus transfer mode = ATM). Solche ATM Vermittlungssysteme sind ausführlich in "Der Fernmelde = Ingenieur", 41. Jahrgang/Heft 9, September 1987, insbesondere Punkt 3.4 auf den Seiten 8 und 9 beschrieben. Bei diesen ATM Vermittlungssystemen können die Zellen beliebig verteilt sein. Eine weitere Variante bilden die sogenannten hybriden Vermittlungssysteme, bei denen ATM- und STM-Zellen in einem Rahmen angeordnet sind; ein solcher Rahmen kann beispielsweise für 4 Zellen, die jeweils 4 Zeitschlitze aufweisen, definiert sein. Die zu einer Verbindung gehörenden STM-Zellen befinden sich hierbei immer in äquidistanten Abständen innerhalb der Datenstruktur.

Weiterhin ist aus der DE-OS 3742941 bekannt, mit einer Adressiereinheit den Inhalt der Zellen in vorgegebene Speicherplätze eines Speichers einzulesen und entsprechend gesteuert wieder auszulesen, so daß die zusammengehörenden Zeitschlitze eines Rahmens wieder zusammengefaßt werden können.

Bei der Umwandlung der eingangsseitigen zellenorientierten Datenstruktur in die ausgangsseitige rahmenorientierte Datenstruktur - hier als Unterrahmen bezeichnet - kann es bedingt durch die Adressierungsmechanismen zu Verzögerungen kommen, die die Geschwindigkeit der Umwandlung negativ beeinflussen.

Der Erfindung liegt die Aufgabe zugrunde ein Verfahren der eingangs genannten Art so zu verbessern, daß eine günstige Wahrscheinlichkeitsverteilung bezüglich des Auftretens von Verzögerungen bei der Umwandlung von einer zellenorientierten in eine rahmenorientierte Datenstruktur erreicht wird.

Zur Lösung dieser Aufgabe weist ein Verfahren der eingangs genannten Art die kennzeichnenden Merkmale des Anspruchs 1 auf.

Mit einer Vorrichtung nach Anspruch 5 zur Durchführung des Verfahrens ist in vorteilhafter Weise ein Schaltungsaufbau herzustellen, mit dem die erfindungsgemäßen Verfahrensmerkmale bei Paketvermittlungssystemen einfach anzuwenden sind und die Übertragungskriterien weiter verbessert sind.

Besondere Ausgestaltungen der Erfindung sind den Unteransprüchen zu entnehmen.

Das erfindungsgemäße Verfahren ist insofern vorteilhaft, als daß die ansonsten nach starren Kriterien arbeitende Adressierlogik für Speicherprozedur derart optimiert werden kann, daß der Speicherplatz für den abzuspeichernden Zeitschlitz im Speicher der Lage des aktuellen Lesezeigers zum Auslesen der Speicherinhalte angepaßt werden kann. Die Dauer bis der erste Zeitschlitz einer Zelle aus der Speichermatrix wieder ausgelesen wird ist somit maximal die Dauer der nunmehr in einem Unterrahmen angeordneten Zeitschlitze und im Regelfall sogar kürzer.

Es ist durch das erfindungsgemäße Verfahren sichergestellt, daß die einzulesende Zelle so im Speicher angeordnet ist, daß das Auslesen des ersten Zeitschlitzes eines auszulesenden Unterrahmens nach dem endgültigen Auslesen des vorhergehenden Unterrahmens sofort anschließend ohne große Verzögerungen erfolgt. Die Berechnung der noch auftretenden Verzögerungen ist im Unteranspruch 2 angegeben, wobei in vorteilhafter Weise die Differenz zwischen dem Schreib- und dem Lesezeiger im günstigsten Fall 1 ist und im ungünstigsten Fall die Anzahl N der Zeitschlitze in einem Unterrahmen beträgt. Eine Optimierung des Verfahrens kann somit anhand der Parameter N für die Anzahl der Zeitschlitze eines Unterrahmens, des Parameters M für die Anzahl der Zeitschlitze einer Zelle und mit dem Parameter C für die Differenz zwischen dem Ort des Schreib- und des Lesezeichens vorgenommen werden.

Eine Besonderheit besteht für den Fall, daß in sogenannter synchroner Zeitvielfachtechnik (STM) vermittelt wird, da hier die sogenannten STM-Zellen immer in gleiche Spalten der Speichermatrix eingeordnet werden, so daß bei einem solchen Vermittlungssystem überhaupt keine Verzögerungen auftreten.

Die Erfindung wird anhand der Figuren erläutert. Es zeigen:

Figur 1 eine Darstellung der Struktur eines zellenorientierten Datenstroms und eines rahmenorientierten Datenstroms,

Figur 2 ein Blockschaltbild einer Umwandlungseinheit für die Umwandlung eines zellenorientierten Datenstroms in einen rahmenorientierten Datenstrom,

Figur 3 eine detailliertere Darstellung einer Umwandlungseinheit,

Figur 4 Arbeitsflußdiagramm für eine Spaltenverwaltung in der Umwandlungseinheit,

Figur 5 ein Blockdiagramm mit einer adaptiven Spaltenverwaltung in der Umwandlungseinheit,

Figur 6 ein Arbeitsflußdiagramm für die adaptive Spaltenverwaltung,

Figur 7 eine Organisationsstruktur eines Verwaltungsspeichers nach Figur 5,

Figur 8 ein Ablaufplan der Funktionsweise eines Ausführungsbeispiels eines Speichers (FIFO-Speicher) der Umwandlungseinheit und

Figur 9 ein detaillierteres Schaltbild des Speichers nach Figur 8.

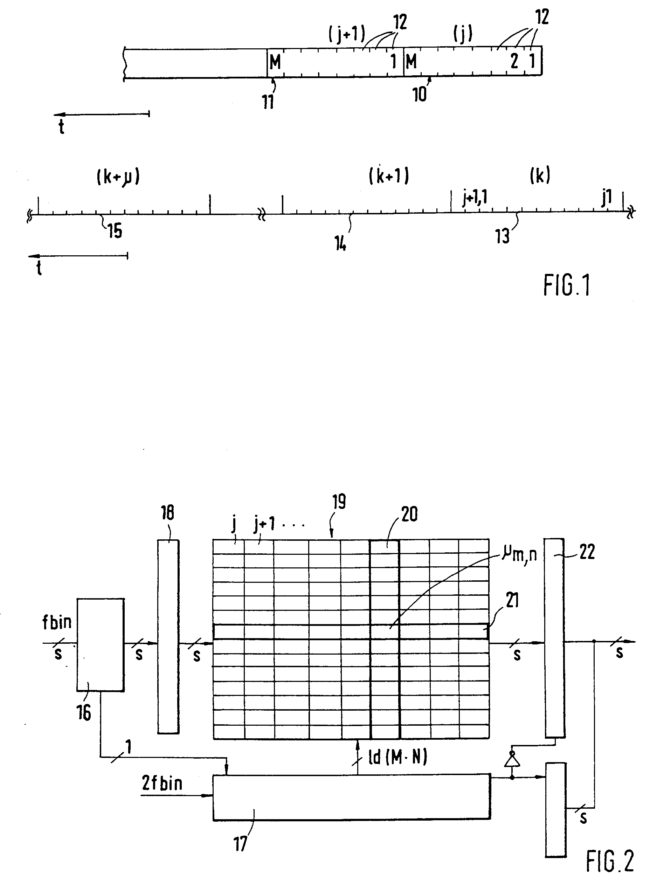

In der Figur 1 ist symbolisch ein Datenstrom über der Zeit t dargestellt in dem sich Zellen 10 und 11, die wiederum in Zeitschlitze 12 aufgeteilt sind, befinden. Die Zelle 10,jeweils indiziert mit dem Buchstaben (j), weist die Zeitschlitze 12 (j1; j2; ...jμ) auf. Die zeitlich folgende Zelle (j + 1) enthält Zeitschlitze 12 (j + 1,1; j + 1,2; ...j + 1,μ). Im unteren Teil der Figur 1 sind Unterahmen 13, 14, 15 über der Zeit t dargestellt, die indiziert mit dem Buchstaben (k) die Unterahmen (k; k + 1;....k + μ) darstellen. Hier ist lediglich beispielhaft dargestellt, wie die Zeitschlitze 12 (j1; j2;...j,μ) der Zelle 10 in den verschiedenen Unterahmen 13, 14, 15 an jeweils gleicher Stelle angeordnet sind. Das gleiche gilt für Zeitschlitze 12 der Zelle 11 mit den Indizes (j + 1,1; ...j + 1,μ).

Beim Blockschaltbild einer erfindungsgemäßen Umwandlungseinheit nach der Figur 2 wird der eingangsseitige Datenstrom mit der Taktrate 2fbin in einem Leerzellendetektor 16 eingelesen, der über eine Steuerleitung mit einer Adressierlogik 17 verbunden ist. Der Ausgang des Leerzeitschlitzdetektors 16 ist auf ein Register 18 geführt, in dem jeweils ein Zeitschlitz 12 zwischengespeichert wird. Die Dateninhalte der jeweiligen Zeitschlitze 12 werden in Speicherplätze μ(Zeile,Spalte) eines Speichers 19 eingelesen.

Das Einlesen erfolgt gesteuert durch die Adressierlogik 17 derart, daß die Zeitschlitze 12 jeweils einer Zelle in einer senkrechten Spalte des Speichers 19 angeordnet werden. Insgesamt enthält der Speicher 19 NxM Zeitschlitze, wobei das Auslesen, wiederum gesteuert von der Adressierlogik 17 derart geschieht, daß jeweils die Zeitschlitze einer Zeile aufeinanderfolgend ausgelesen wird, so daß sich die in der Figur 1 dargestellte Anordnung der Unterahmen 13, 14, 15 ergibt. Der ausgangsseitige nunmehr rahmenorientierte Datenstrom gelangt zunächst in ein Ausgangsregister 22 und von da auf den Ausgang der Umwandlungseinheit wobei noch der Ausgang eines weiteren Registers 23 zugefügt wird.

Die in der Figur 2 dargestellte Umwandlungseinheit arbeitet mit einer zyklisch ein- und auslesenden Adressierlogik 17 wobei ein Zyklus jeweils eine Dauer von NxM Zeitschlitzen 12 hat und sich somit aus einer Anzahl N Zeitschlitzen 12 einer Zelle ein Unterahmen 13,14,15 mit einer Anzahl M Zeitschlitzen 12 bildet. Der Schreibalgorithmus der Adressierlogik 17 ist in der Weise aufgebaut, daß jeweils ein Zeitschlitz in die Spalte (j) - entsprechend einer Zelle 10 bzw 11 des Speichers 19, der hier von einer Speichermatrix gebildet ist - eingeschrieben wird und zwar beginnend mit einem Matrixzeitschlitz μ(m,n). Die Dauer bis der erste Zeitschlitz 12 (j1) der Zelle (j) den Speicher 19 verläßt ist mit maximal die Dauer eines Unterahmens 13, 14, 15. Im Folgenden wird eine Berechnung der auftretenden Verzögerungen beim Auslesen mittels der zyklisch arbeitenden Adressierlogik 17 durchgeführt, wobei davon ausgegangen wird, daß beim Eintreffen des ersten Zeitschlitzes 12 (j1) der Zelle (j) sich der ausgangsseitige Lesezeiger, gesteuert von der Adressierlogik 17, im Zeitschlitz 12 (k) des Unterahmens 13, 14, 15 (l) befindet. Die Indizes (k(für die Zeile)-) und (l(für die Spalte)) sind die Koordinaten des Lesezeigers beim Eintreffen des ersten Zeitschlitzes 12 einer neuen Zelle 10, 11 und werden aus den Variablen des eingangsseitigen Datenstromes (j,M) und der Länge des Unterrahmens 13, 14, 15 errechnet.

$$k = (( M^*j ) + 1 - C ) \, \mathrm{mod}_N$$

$$1 = \left| \frac{(( M*j ) + 1 - C ) - k}{N} \right| \mathrm{mod}_M \qquad ,$$

Hierbei stellt C die Differenz zwischen Schreib- und Lesezeiger als Anzahl von Zeitschlitzen 12 zu diesem Zeitpunkt dar, an dem der Schreibzeiger auf dem ersten Zeitschlitz μ(0,0) liegt. C ist somit im Minimum 1 und im Maximum gleich der Anzahl (N) der Zeitschlitze 12.

Der Schreibalgorithmus des von der Adressierlogik 17 zyklisch gesteuerten Schreibzeigers errechnet somit die günstigste Adresse p(k,l) in dem Speicher 19 nach folgenden Kriterien:

$$p(k,l) = \begin{cases} u\ (l,j) & k < j \\ u\ (l+1,j) & k > j \end{cases}$$

Die Verzögerung d(j) des ersten Zeitschlitzes 12 (j1) der Zelle (j) ergibt sich zu

$$d(j) = \begin{cases} j - k & k < j \\ N + j - k & k > j \end{cases}$$

Hinsichtlich der Arbeitsweise der Adressierlogik 17 sind verschiedene Ausführungen möglich, wobei die Adressierlogik 17 entweder in einem -wie oben beschriebenen- zyklischen Verfahren oder in einem adaptiven Verfahren mit einer vom Verbindungsaufbau (STM, ATM, hybrid) abhängigen individuellen oder partiellen Optimierung arbeitet.

Bei der zyklischen Lösung findet bei allen Verbindungsarten (STM, ATM, hybrid) keine Optimierung statt. Bei der adaptiven Lösung findet bei synchronen (STM) Verbindungen eine Optimierung nur bei der jeweils ersten Zelle 10 einer Verbindung statt, ansonsten folgt eine synchrone Arbeitsweise ohne Optimierung. Bei asynchronen (ATM) Verbindungen wird jede Zelle 10, 11 individuell optimiert und bei hybriden (STM, ATM) Verbindungen werden jeweils die ATM-Zellen individuell sowie jeweils nur die erste STM-Zelle optimiert.

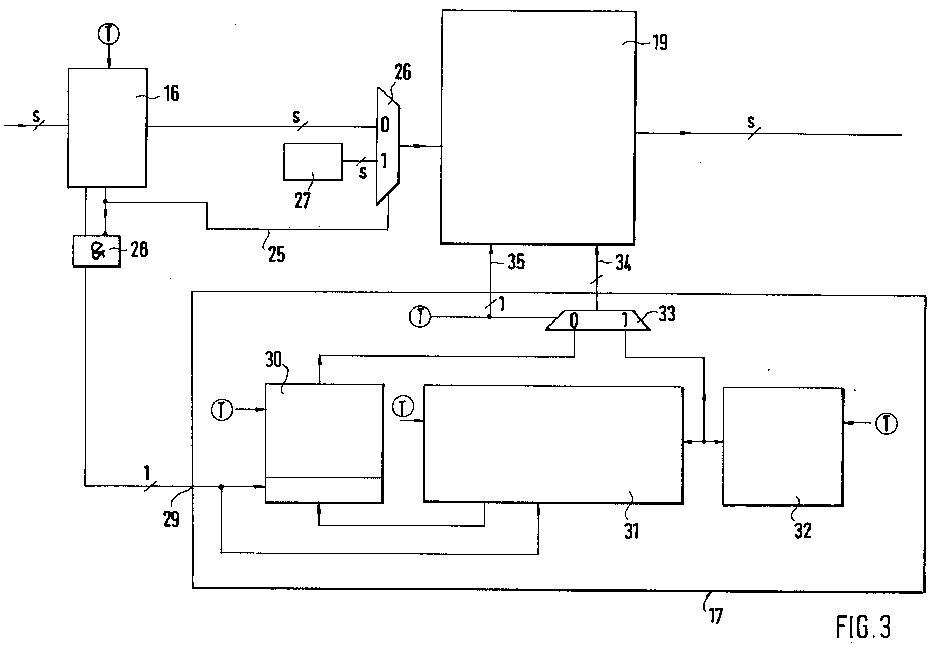

In der Figur 3 ist eine erste detailliertere Ausführungsform der Schaltung nach Figur 2 für eine Zellen - Unterahmen - Umwandlungseinheit mit einem zyklischem Adressierverfahren dargestellt. Der Leerzellendetektor 16 (vgl. Fig. 2) untersucht den zellenorientierten ankommenden Datenstrom auf Leerzellen und aktiviert bei positivem Ergebnis eine zugehörige Steuerleitung 25. Diese Steuerleitung bleibt während der gesamten Dauer der ankommenden Leerzelle aktiviert, wodurch sogenannte Leerzeitschlitze über einen Multiplexer 26 in den Speicher 19 gelangen und eine komplette Spalte 20 ausfüllen. Die Leerzeitschlitze werden von einem Leerzeitschlitzgenerator 27 erzeugt, wobei dieser Leerzeitschlitzgenerator 27 im einfachsten Fall durch ein fest verdrahtetes Datenwort der Breite s (s = Anzahl der Bits pro Zeitschlitz 12) dargestellt sein kann.

Der Beginn einer ankommenden Zelle 10,11 führt im Leerzellendetektor 16 zu Generierung eines Zellenanfangssignals, das über ein UND-Glied 28 an dessen anderen negiertem Eingang das Leerzellensignal geführt ist. Der Ausgang des UND-Gliedes 28 ist mit dem Eingang 29 der Adressierlogik 17 verbunden, die nach Eintreffen eines Zellenanfangssignals die Optimierung der Speicherplatzzuweisung ausführt. Die Adressierlogik 17 besteht im wesentlichen aus einem Schreibspaltenzähler 30, einer Spaltenverwaltung 31, einem Lesezähler 32 und einem Adressmultiplexer 33. Die Adressierlogik 17 wird insgesamt mit einem Takt T versorgt.

Das Zellenanfangssignal am Eingang 29 der Adressierlogik 17 veranlaßt die Spaltenverwaltung 31 den Schreibspaltenzähler 30 zu inkrementieren, ferner die aktuelle gerade ausgelesene Spalte zu bestimmen und aus diesen beiden Ergebnissen in der anhand der Figur 2 beschriebenen Weise die Adresse desjenigen Zeitschlitzes 12 der betreffenden Spalte 20 zu bestimmen, der als nächster ausgelesen wird. Diese Adresse wird als Anfangsadresse dem Schreibspaltenzähler 30 übergeben. Der Schreibspaltenzähler 30 ist ein ld (M*N) (M = Anzahl der Zeitschlitze einer Zelle; N = Anzahl der Zeitschlitze eines Unterahmens) Bit breiter Synchronzähler und addiert mit jedem Zählschritt die Zahl M zum jeweiligen Stand hinzu und berechnet somit die optimale Adresse im Speicher 19.

Der Lesezähler 32 ist ebenfalls ein Synchronzähler der Bitbreite ld(M*N) und inkrementiert den aktuellen Zählerstand bei jedem Zählschritt um eins. Das Zählergebnis ist die Adresse des jeweils auszulesenden Ausgangszeitschlitzes. Das Weitersetzen der beiden Zähler 30 und 32 wird vom Takt T gesteuert der darüberhinaus auch den Adressmultiplexer 33 und eine Adressteuerleitung 34 und eine Schreib- Leseleitung 35 zur Speichermatrix 19 steuert. In einem Taktzyklus wird jeweils ein Zeitschlitz 12 in den Speicher 19 einmal eingeschrieben und einmal ausgelesen.

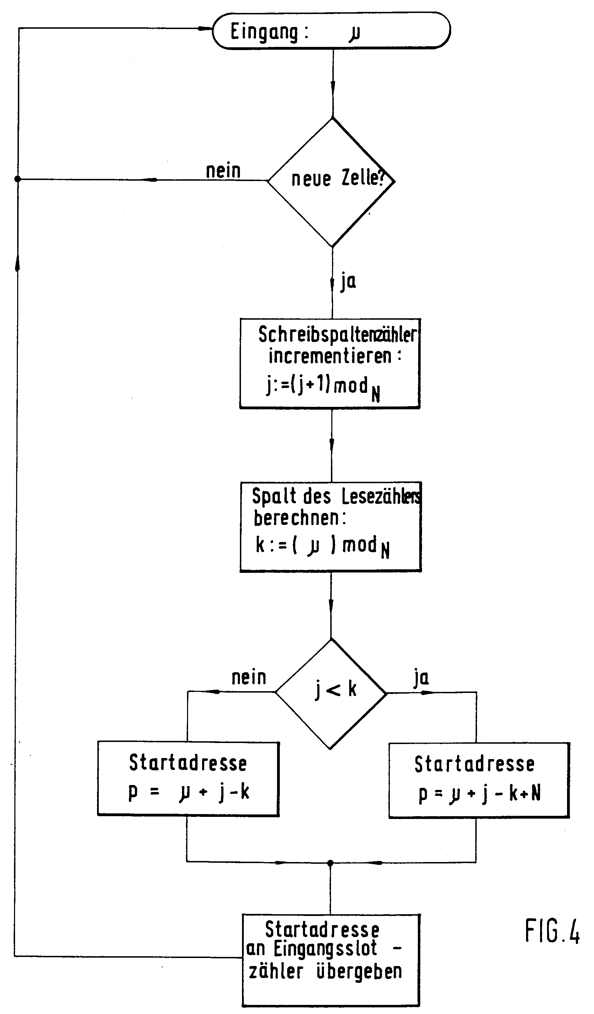

Anhand der Figur 4 ist mit einem Arbeitsflußdiagramm die oben beschrieben Funktion der Adressierlogik 17 gezeigt.

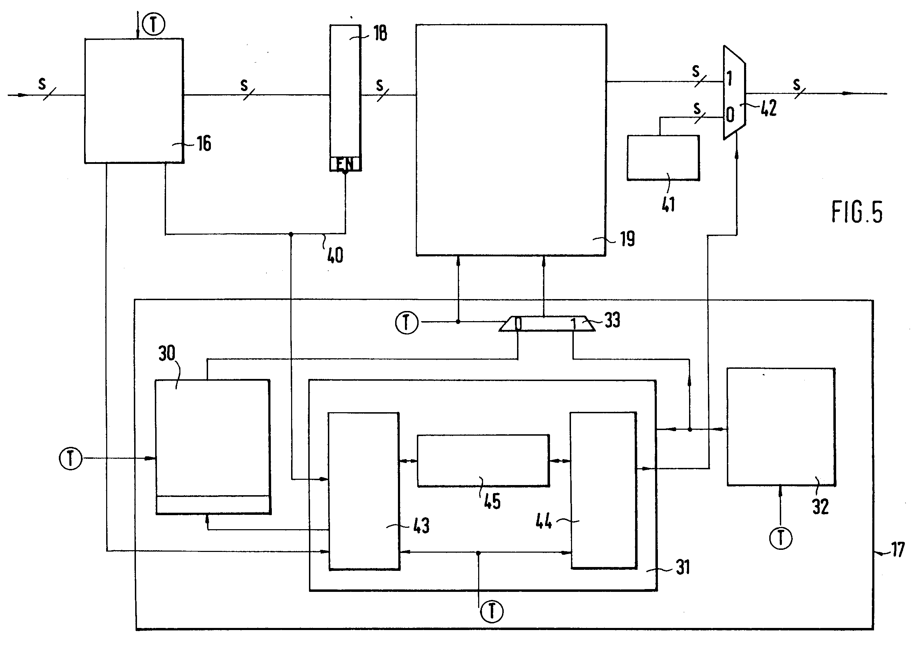

In der Figur 5 ist eine zweite verbesserte Ausführungsform der Schaltungsanordnung nach der Figur 3 mit einer adaptiven Optimierung der beschriebenen Datenumwandlung gezeigt. Bei dieser adaptiven Lösung werden Leerzellen, die vom Leerzellendetektor 16 erkannt werden, nicht in den Speicher 19 eingeschrieben, da das Eingangsregister 18 (siehe Figur 2) über eine Leerzellensteuerleitung 40 deaktiviert wird. Dies hat zur Folge, die Leerinformation von einem Leerzeitschlitzgenerator 41 über einen Ausgangsmultiplexer 42 in den Datenstrom am Ausgang des Speichers 19 eingefügt wird.

Die Spaltenverwaltung 31 (siehe Figur 3) besteht aus einer Schreibsteuereinheit 43 und einer Lesesteuereinheit 44 die über einen gemeinsamen Verwaltungsspeicher 45 kommunizieren. Die Funktion der Adressierlogik 17 nach dem in der Figur 5 dargestellten Ausführungsbeispiel mit einer adaptiven Optimierung unterscheidet sich von der zyklischen Lösung dadurch, daß beim Eintreffen des ersten Zeitschlitzes 12 (j1) nach der günstigsten Stelle (k) in einem Unterahmen, bzw. in einer Zeile des Speichers 19 gesucht wird, die die Bedingung d(j) = d(j,T)min erfüllt. Es erfolgt somit keine starre Bindung an den Ort des Lesezeigers sondern eine Optimierung zum jeweils aktuellen Zeitpunkt. Die Wahrscheinlichkeitsverteilung der auftretenden Verzögerungen ist hierbei abhängig vom Belegungszustand des Vermittlungssystems und vom aktuellen Verkehrsaufkommen.

Hinsichtlich der Funktion der Adressierlogik 17 wird -wie oben beschrieben- ein Unterschied zwischen asynchron vermittelten Zellen ( ATM-Zellen) und synchron vermittelten Zellen ( STM-Zellen) gemacht. Dies kann derart geschehen, daß die Umwandlung nur für ATM-Zellen optimiert wird, da hier die Zeitschlitze 12 einer Zelle 10,11 an unterschiedlichen Stellen im Unterahmen angeordnet werden können. Die STM-Zellen werden wie in der synchronen Vermittlungstechnik üblich, an der der Stelle (j) im Unterahmen entsprechenden Stelle (j) im Speicher 19 angeordnet. Hierbei ist jedoch erforderlich, daß ein Erkennungsmechanismus vorhanden ist, der eine Unterscheidung von ATM-Zellen und STM-Zellen möglich macht. Weiterhin muß eine Vorausreservierung vorgesehen werden, die sicherstellt, daß die entsprechende Spalte 20 im Speicher 19 beim Eintreffen der ersten STM-Zelle frei ist.

Bei der anhand der Figur 5 beschriebenen Variante wird die Optimierung für ATM-Zellen und STM-Zellen gleichermaßen vorgenommen. Dies macht neben der Unterscheidung zwischen ATM-Zellen und STM-Zellen die zusätzliche Spaltenverwaltung 31 notwendig, die sicherstellt, daß die der ersten ankommenden STM-Zelle zugewiesene Spalte 20 im Speicher 19 reserviert bleibt für alle in dieser Unterahmenposition folgenden STM-Zellen.

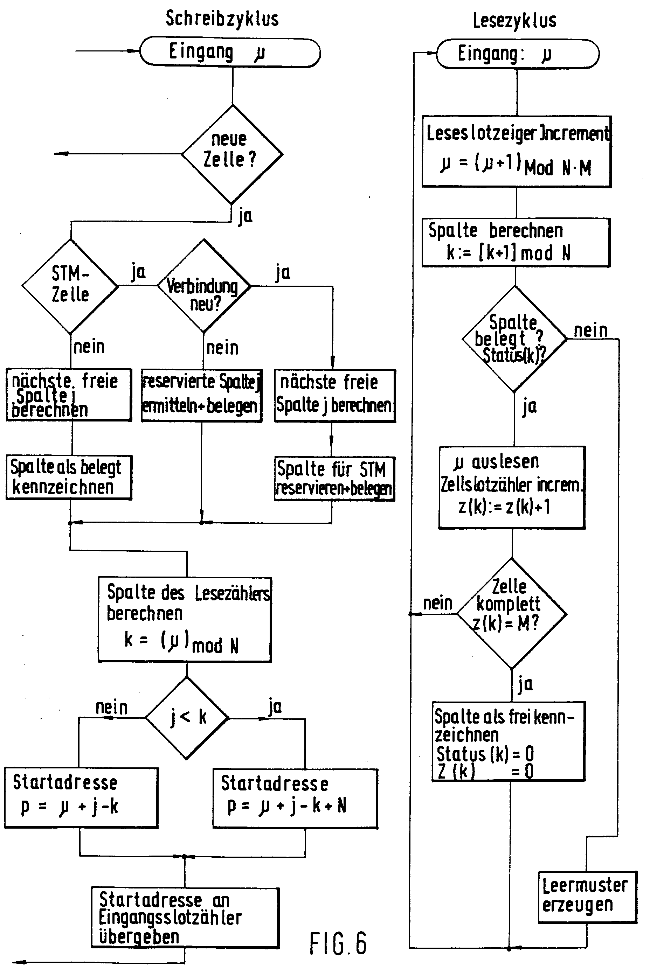

Die Arbeitsweise der Spaltenverwaltung 31 gemäß Figur 4 für die Steuerung eines Schreibzyklusses und eines Lesezyklusses im Speicher 19 sind im Arbeitsflußdiagramm der Figur 6 dargestellt.

Die Organisation des Verwaltungsspeichers 45 gemäß Figur 5 für eine adaptive Optimierung des Schreib- und Lesezyklus ist in der Figur 6 dargestellt. Im Verwaltungsspeicher 45 sind für die Anzahl N der Zeitschlitze 12 in einem Unterahmen 13, 14, 15 Datenwörter unterschiedlicher Bitbreite für die Reservierung von STM-Zellen, des jeweiligen Spaltenbelegungsstatus, für den Stand eines Zellschlitzzählers, für die jeweils reservierte Spalte 20 für STM-Zellen an den vorgegebenen Positionen (j) und für ein nicht dargestelltes Hilfsregister für die Spaltensuche vorhanden.

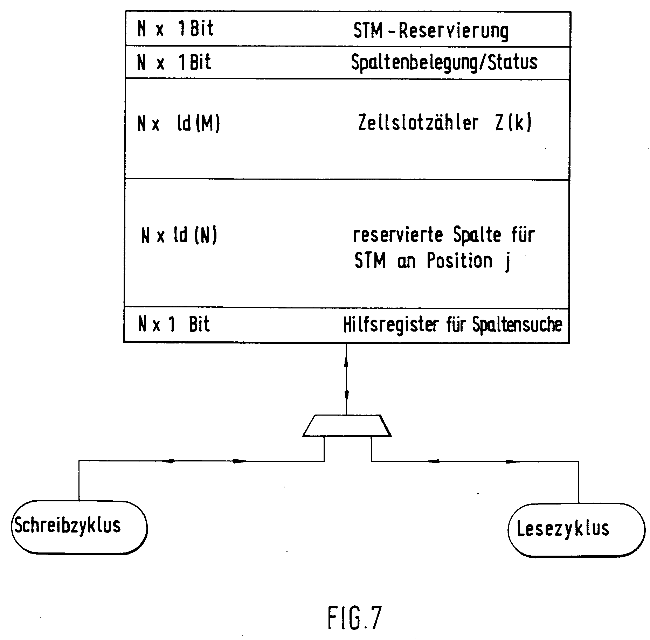

Bei der Reservierung von STM-Zellen wird im Verwaltungsspeicher 45 eingetragen, an welcher Position des Unterahmens STM-Zellen stehen. Für diese wird einmalig eine Spalte 20 reserviert. Der Spaltenbelegungsstatus gibt an, welche Spalten 20 der aktuellen Lesezeile gültige Nachrichten enthalten; gleichzeitig liefert diese Statusinformation Informationen für die weitere Spaltenbelegungsprozedur. Der Zeitschlitzzähler gemäß Figur 7 wird bei jedem Lesezyklus inkrementiert und gibt somit an, wieviele Zeitschlitze der Zellen 10, 11 in der betreffenden Spalte 20 schon gelesen wurden. Sind alle Zeitschlitze 12 gelesen wird die betreffende Spalte 20 als frei gekennzeichnet. Das weiterhin in der Figur 7 erwähnte Hilfsregister ist für die Such nach freien Spalten vorgesehen.

Die anhand der Figuren 1 bis 7 beschriebene Umwandlungseinheit für einen zellenorientierten Datenstrom in einen rahmenorientierten Datenstrom enthält alle Prinzipien, die für eine Umwandlungseinheit eines rahmenorientierten Datenstroms in einen zellenorientierten Datenstrom maßgeblich sind. Bei Aufbau und Arbeitsweise dieser Umwandlungseinheit muß lediglich berücksichtigt werden, daß die einzelnen Zeitschlitze eines ankommenden rahmenorientierten Datenstroms in verschiedene Bereiche eines Speichers geschrieben werden, sodaß die in verschiedene Unterahmen zerstückelte Zellen wieder zusammengesetzt werden und somit ein zellenorientierter Datenstrom die Umwandlungseinheit verläßt. Die Steuerung erfolgt auch hier über eine Adressierlogik in äquivalenter Weise zu der anhand der Figuren 1-7 beschriebenen Arbeitsweise.

Hinsichtlich der Ausführungsformen der Speichermatrix 19 und der Adressierlogik 17 sind verschieden Ausführungsformen möglich, die sich lediglich in der Adressierungsprozedur sowie in der Schreib- Lese-

6

steuerung geringfügig unterscheiden können. Die dargestellten Prinzipien der Optimierung der Schreib-Leseprozeduren zur Minimierung der Verzögerungen bei der Umwandlung des Datenstromes bleiben jedoch auch hier gültig.

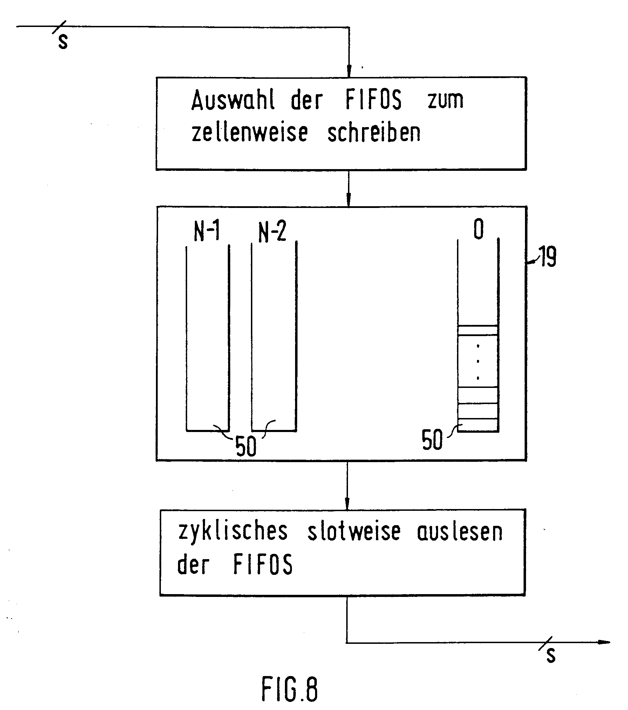

In der Figur 8 ist ein schematischer Ablaufplan der Funktionsweise einer abgeänderten Ausführungsform der vorangehend beschriebenen Schaltungsanordnung mit einem sogenannten FIFO-Speicher (First in - First out - Speicher) als Speicher 19 dargestellt. Ein ankommender zellenorientierter Datenstrom wird zellenweise in jeweils einen von N FIFO-Speichern 50 eingelesen und anschließend zeitschlitzweise aus den FIFO-Speichern 50 ausgelesen. Im ausgangsseitigen Datenstrom sind somit die an jeweils gleichen Stellen in den FIFO-Speichern 50 stehenden Zeitschlitze 12 zu einem Unterrahmen zusammengefügt. Der Adressiervorgang für das Einlesen in die FIFO-Speicher 50 entspricht im wesentlichen der anhand der Figuren 2 und 3 beschriebenen Arbeitsweise.

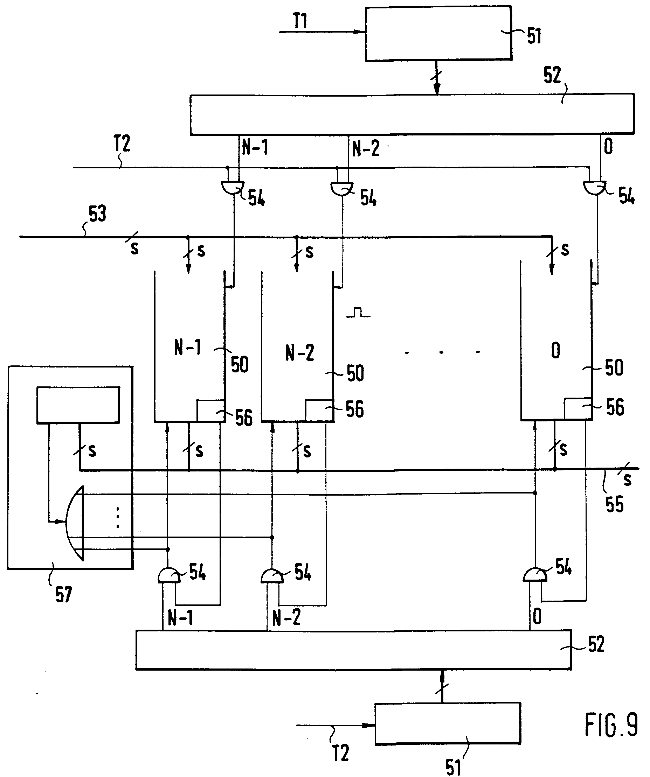

In der Figur 9 ist ein ausführliches Schaltbild einer Anordnung mit FIFO-Speichern 50 gemäß Figur 8 dargestellt. Es ist hier ein Zähler 51 für $mod_N$ Zählperioden getaktet mit dem Zellentakt T1 und ein nachgeschalteter Dekoder 52 für die direkte Adressierung der einzelnen N FIFO-Speicher 50 vorhanden. Der auf einer Leitung 53 ankommende zellenorientierte Datenstrom wird zeitschlitzweise in jeweils einen einzelnen FIFO-Speicher 50 eingelesen. Die Adressierung erfolgt zyklisch über die jeweils über ein UND-Glied 54 verknüpften Dekoderausganssignale und den Zeitsschlitztakt T2.

Der auf einer Leitung 55 herausgehende Datenstrom bildet einen Unterrahmen, wobei die Daten jeweils einer Zeitschlitzposition in einem FIFO-Speicher 50 jeweils an gleicher Position im Unterrahmen erscheinen. Die Steuerung der Ausleseprozedur erfolgt mit annähernd gleichen Bausteinen 51, 52 , wobei jedoch die Taktsteuerung des Zählers 51 mit dem Zeitschlittakt T2 vorgenommen wird.

In jedem FIFO-Speicher 50 ist eine Füllstandsanzeigevorrichtung 56 angeordnet, die signalisiert ob sich mindestens ein mit Daten versehener Zeitschlitz 12 im FIFO-Speicher 50 befindet. Wird beim Adressieren des jeweiligen FIFO-Speichers 50 festgestellt, daß kein mit Daten versehener Zeitschlitz 12 vorhanden ist wird über einen Leerzeitschlitzgenerator 57 ein Leerzeitschlitz in die aktuelle Position im Unterrahmen eingefügt.

## Patentansprüche

1. Verfahren zur Umwandlung der Datenstruktur von Nachrichten in einem Paketvermittllungssystem, bei dem
   - die Nachrichten sowohl in zellenorientierten Datenstrukturen eingefügt sind, die wiederum Zeitschlitze einheitlicher Länge aufweisen, als auch
   - in einer rahmenorientierten Datenstruktur auftreten, wobei die Zeitschlitze einer umgewandelten Zelle jeweils an vorgegebenen Stellen in aufeinanderfolgenden Rahmen angeordnet sind,
   **dadurch gekennzeichnet**, daß
   - die Umwandlung der zellenorientierten Datenstruktur in eine rahmenorientierte Datenstruktur und umgekehrt beim Einschreiben bzw.- beim Auslesen der Daten in einen Speicher (19) mit folgenden Verfahrensmerkmalen erfolgt:
   - die Zellen (10,11) der zu übertagenen Daten mit zellenorientierter Datenstruktur werden jeweils in eine Spalte (20) des Speichers (19) eingeschrieben, wobei sich jeweils ein Zeitschlitz (12) einer Zelle (10,11) in einem Spaltenelement des Speichers (19) befindet,
   - das Auslesen der Daten der Zeitschlitze (12) aus dem Speicher (19) und das Einfügen in einen Unterrahmen (13,14,15) erfolgt für jeweils einen Unterahmen (13,14,15) aus der gleichen Spaltenposition,
   - in einer Adressierlogik (17) wird die optimale Position des aktuell zu speichernden Zeitschlitzes (12) in der Speichermatrix (19) ermittelt und ein entsprechender Speicherzeiger für die Speichersteuerung gesetzt,
   - bei der Optimierung der Speichersteuerung in der Adressierlogik (17) wird der Ort des jeweiligen Matrixzeitschlitzes zugrunde gelegt, der als nächster Zeitschlitz in der jeweils gleichen Spalte der Speichermatrix (19) ausgelesen (Lesezeiger) wird und es wird der zeitliche und/oder räumliche Abstand minimiert.

2. Verfahren nach Anspruch 1
   **dadurch gekennzeichnet**, daß
   - bei einer zyklischen Steuerung des Lesezeigers die Adressierlogik (17) derart organisiert ist, daß beim Eintreffen des ersten Zeitschlitzes (12j1)) einer Zelle (10(j)) sich der ausgangsseitige Lesezeiger, gesteuert von der Adressierlogik (17), im Zeitschlitz (12(k)) des Rahmens (13(l)) befindet und daß
- die Lesezeigerposition durch die Indizes (k) und (l) beschrieben ist:

$$k = (( M^*j ) + 1 - C ) \, mod_N \quad ;k = 0,1,...N\text{-}1$$

$$l = \left| \frac{(( M^*j ) + 1 - C ) - k}{N} \right| mod_M \quad ;l=0,1,...M\text{-}1,$$

wobei
l die Zeilennummer im Speicher (19) und
k die Spaltennummer im Speicher (19) angeben und
C die Differenz zwischen Schreib- und Lesezeiger als Anzahl von Zeitschlitzen (12) zu diesem Zeitpunkt darstellt, an dem der Schreibzeiger auf dem ersten Zeitschlitz (12) einer Zelle (10) liegt.

3. Verfahren nach Anspruch 1
**dadurch gekennzeichnet**, daß
- mit einer adaptiven Steuerung des Lesezeigers Zellen (10) ohne Dateninhalt von einem Leerzellendetektor (16) erkannt werden und nicht in den Speicher (19) eingeschrieben werden.

4. Verfahren nach Anspruch 1
**dadurch gekennzeichnet**, daß
- bei Zellen (10,11) die in synchroner Zeitvielfachtechnik (STM) organisiert sind die Zeitschlitze (12) in Abhängigkeit von ihrer Lage in der Zelle (10,11) in identischen Lagen in den jeweiligen Spaltenpositionen des Speichers (19) gespeichert werden - unabhängig von der Lage des Lesezeigers.

5. Vorrichtung zur Durchführung des Verfahrens nach einem der vorhergehenden Ansprüche
**dadurch gekennzeichnet**, daß
- der ankommende Datenstrom über einen Leerzellendetektor (16) auf den Eingang des Speichers (19) geführt ist und daß
- die Adressierlogik (17) eingangsseitig mit dem Ausgangssignal des Leerzellendetektors (16) und dem Taktsignal (T,2fbin) beaufschlagt ist und ausgangsseitig über Steuerleitungen (34,35) mit den Adressierungs- und Schreib- Lesesteuerungseingängen des Speichers (19) verbunden ist.

6. Vorrichtung nach Anspruch 5
**dadurch gekennzeichnet**, daß
- zwischen dem Leerzellendetektor (16) und dem Eingang des Speichers (19) ein Multiplexer (26) geschaltet ist, der gesteuert vom Ausgangssignal des Leerzellendetektors (16) entweder den ankommenden Datenstrom durchläßt oder das Ausgangssignal eines Leerzellengenerators (27) in den Datenstrom einfügt.

7. Vorrichtung nach Anspruch 5
**dadurch gekennzeichnet**, daß
- die Adressierlogik (17) einen Schreibspaltenzähler (30), der mit dem Ausgangssignal des Leerzellendetektors (16) und dem Taktsignal (T) beaufschlagt ist, eine Spaltenverwaltung (31) und einen Lesezähler (32) aufweist und daß
- die Ausgangssignale des Schreibspaltenzählers (30), der Spaltenverwaltung (31) und des Lesezählers (32) über einen Adressmultiplexer (33) und Steuerleitungen (34,35) auf Steuereingänge des Speichers (19) geführt sind.

8. Vorrichtung nach Anspruch 7
**dadurch gekennzeichnet**, daß
- die Spaltenverwaltung (31) eingangsseitig ein Schreibsteuerung (43) und ausgangsseitig eine Lesesteuerung (44) aufweist, die gemeinsam mit einem Verwaltungsspeicher (45) kommunizieren um die optimale Schreibadresse für den Speicher (19) zu ermitteln.

8

9. Vorrichtung nach Anspruch 5
   **dadurch gekennzeichnet**, daß
   - der Speicher (19) aus einer Speichermatrix mit Spalten (20) und Zeilen (21) besteht.

10. Vorrichtung nach Anspruch 5
    **dadurch gekennzeichnet**, daß
    - der Speicher (19) aus mindestens einem FIFO-Speicher (First in / First out - Speicher) aufgebaut ist.

FIG.1

FIG.2

FIG.3

Eingang : μ

neue Zelle?

nein

ja

Schreibspaltenzähler
incrementieren :
$j := (j+1) \bmod_N$

Spalt des Lesezählers
berechnen:
$k := ( \mu ) \bmod_N$

$j < k$

nein

ja

Startadresse
$p = \mu + j - k$

Startadresse
$p = \mu + j - k + N$

Startadresse
an Eingangsslot –
zähler übergeben

FIG. 4

12

FIG.5

**Schreibzyklus**

**Lesezyklus**

( Eingang $\mu$ )

( Eingang: $\mu$ )

◇ neue Zelle ? — **ja**

**Leseslotzeiger Increment**
$\mu = (\mu + 1) \bmod N \cdot M$

◇ STM-Zelle — **ja** → ◇ Verbindung neu? — **ja**

**Spalte berechnen**
$k := [k+1] \bmod N$

**nein** (STM-Zelle)

**nein** (Verbindung neu?)

◇ Spalte belegt ? Status(k)? — **nein**

| nächste. freie Spalte j berechnen | reservierte Spalte j ermitteln + belegen | nächste freie Spalte j berechnen |

**ja** (Spalte belegt)

| Spalte als belegt kennzeichnen | | Spalte für STM reservieren + belegen |

**$\mu$ auslesen**
Zellslotzähler increm.
$z(k) := z(k) + 1$

**Spalte des Lesezählers berechnen**
$k = (\mu) \bmod N$

◇ Zelle komplett $z(k) = M$? — **nein**

◇ $j < k$ — **nein** / **ja**

**ja** (Zelle komplett)

| Startadresse $p = \mu + j - k$ | Startadresse $p = \mu + j - k + N$ |

**Spalte als frei kennzeichnen**
Status (k) = 0
Z (k) = 0

**Startadresse an Eingangsslotzähler übergeben**

**Leermuster erzeugen**

FIG. 6

| | |
|---|---|
| N x 1 Bit | STM – Reservierung |
| N x 1 Bit | Spaltenbelegung/Status |
| N x ld (M) | Zellslotzähler Z(k) |
| N x ld (N) | reservierte Spalte für STM an Position j |
| N x 1 Bit | Hilfsregister für Spaltensuche |

Schreibzyklus

Lesezyklus

FIG.7

```
 S ─────────────────────────┐
                            │
                            ▼
 ┌──────────────────────────────────────┐
 │ Auswahl der FIFOS zum                 │
 │ zellenweise schreiben                 │
 └──────────────────────────────────────┘
                            │
                            ▼
 ┌──────────────────────────────────────┐
 │  N-1    N-2              0            │─ 19
 │                                      │
 │                          ┌──┐        │
 │                          ├──┤        │
 │                          │··│        │
 │                          │··│        │
 │                          ├──┤        │
 │                          ├──┤        │
 │    └─┘    └─┘        50   └──┘        │
 │        50                            │
 └──────────────────────────────────────┘
                            │
                            ▼
 ┌──────────────────────────────────────┐
 │ zyklisches slotweise auslesen         │
 │ der FIFOS                             │
 └──────────────────────────────────────┘
                            │
                            └──────────── S ───►
```

FIG.8

FIG.9